# EUROPEAN PATENT SPECIFICATION

(11) **EP 3 150 432 B1**
(45) Date of publication and mention of the grant of the patent: **12.09.2018**
(21) Application number: 16189335.9
(22) Date of filing: 16.09.2016
(51) Int. Cl.: B60Q 1/00, B60Q 1/26, B62J 6/04, F21S 43/14, F21S 43/19, F21S 43/20

(54) **VEHICLE-USE REAR COMBINATION LAMP AND VEHICLE**
HECKKOMBINATIONSLAMPE ZUR VERWENDUNG IN EINEM FAHRZEUG UND FAHRZEUG
FEU ARRIÈRE COMBINÉ POUR VÉHICULE ET VÉHICULE

(30) Priority: 30.09.2015 JP 2015193792
(43) Date of publication of application: 05.04.2017
(73) Proprietor: Honda Motor Co., Ltd., Minato-ku Tokyo 107-8556 (JP)
(72) Inventor: SOETA, Ryuhei, Wako-shi, Saitama 351-0193 (JP); TAKENAKA, Nobuyuki, Wako-shi, Saitama 351-0193 (JP); KATAOKA, Keiko, Wako-shi, Saitama 351-0193 (JP); KURIKI, Daisuke, Wako-shi, Saitama 351-0193 (JP); ASHIHARA, Eiji, Minato-ku, Tokyo 105-6024 (JP); MORI, Kazuhiko, Wako-shi, Saitama 351-0193 (JP)
(74) Representative: Piésold, Alexander James

(56) References cited:
- EP-A1- 2 301 802
- EP-A2- 2 127 947
- WO-A1-2014/157354
- JP-U- S50 152 580

## Description

The present invention relates to a vehicle-use rear combination lamp and a vehicle where a first lamp portion which emits a first light and a second lamp portion which emits a second light are mounted on a common housing. [0002]

For example, in JP-A-2015-44563, a vehicle-use rear combination lamp is proposed where the rear combination lamp has a tail lamp function and a stop lamp function integrally. In the vehicle-use rear combination lamp, a tail lamp light source mounted on a housing also functions as a stop lamp light source.

In the above-mentioned vehicle-use rear combination lamp, there may be a case where a first lamp portion which emits a first light (stop lamp light) and a second lamp portion which emits a second light (tail lamp light) are mounted on a common housing, and the first lamp portion and the second lamp portion are integrally covered by a lens. In this case, in the lens, a first lens portion to which the first light is irradiated and a second lens portion to which the second light is irradiated are formed.

However, when the second lens portion is disposed vehicle forward of and below the first lens portion, for an occupant of a succeeding vehicle, the larger a vehicle height of the succeeding vehicle, the more difficult the viewing of the second lens portion of a preceding vehicle becomes.

It is an object of at least the preferred embodiments of the present invention to provide a vehicle-use rear combination lamp and a vehicle which can ensure visibility of a second light and visibility of a first light from the rear of and above the vehicle simultaneously even when a first lens portion is positioned vehicle forward of and below the second lens portion.

Document EP 2301802 discloses a vehicle-use rear combination lamp according to the preamble of claim 1.

A vehicle-use rear combination lamp according to the present invention has the following technical features.

### First technical feature;

The vehicle-use rear combination lamp which includes: a first lamp portion which emits a first light; a second lamp portion which emits a second light; a common housing on which the first lamp portion and the second lamp portion are mounted; and a lens which integrally covers the first lamp portion and the second lamp portion, wherein the lens has a first lens portion to which the first light is irradiated and a second lens portion to which the second light is irradiated, the first lens portion is positioned vehicle forward of and below the second lens portion, a lower surface of a portion which connects the first lens portion and the second lens portion to each other extends substantially parallel to an optical axis of the second light, and wherein
the second lamp portion is disposed vehicle forward of a front end of the lower surface;
characterised in that the optical axis of the second light is inclined upwardly and rearwardly with respect to an optical axis of the first light.

### Second technical feature;

The first lamp portion may have a first printed circuit board and a first light source mounted on the first printed circuit board, the second lamp portion may have a second printed circuit board provided as a part separate from the first printed circuit board and a second light source mounted on the second printed circuit board, and a projecting portion which projects vehicle rearward may be formed on a portion of the lens positioned between the first printed circuit board and the second printed circuit board as viewed from the rear of the vehicle.

### Third technical feature;

The projecting portion may be disposed on a boundary portion between the portion and the first lens portion.

### Fourth technical feature;

The second light source may be formed of a light emitting diode, a plurality of second light sources may be disposed along a left-and-right direction, and out of the plurality of second light sources, the respective second light sources positioned on both left and right ends may be disposed below the second light source positioned at the middle in the left-and-right direction.

### Fifth technical feature;

The vehicle-use rear combination lamp may further include a third lamp portion which is formed as a part separate from the second lamp portion and emits a third light, the third lamp portion may have a third printed circuit board and a third light source mounted on the third printed circuit board, the lens may include a third lens portion to which the third light is irradiated, and the third lens portion may be positioned vehicle rearward of and above the second lens portion.

### Sixth technical feature;

The third light source may be formed of a light emitting diode, a plurality of third light sources may be disposed along the left-and-right direction, and out of the plurality of third light sources, the respective third light sources positioned on both left and right ends may be disposed above the third light source positioned at the middle in the left-and-right direction.

### Seventh technical feature;

An optical axis of the third light may be substantially parallel to the optical axis of the second light.

### Eighth technical feature;

A lower surface of a portion which connects the second lens portion and the third lens portion to each other may extend substantially parallel to the optical axis of the third light.

### Ninth technical feature;

A distance from the second light source to the second lens portion and a distance from the third light source to the third lens portion may be substantially equal.

A vehicle according to the present invention has the following technical features.

### Tenth technical feature;

The vehicle includes the vehicle-use rear combination lamp described in any one of the above-mentioned first to ninth technical features.

### Eleventh technical feature;

The vehicle may be a motorcycle having a carrier (34) above the vehicle-use rear combination lamp (10), and a lower surface (34a) of the carrier (34) may be inclined upward toward the rear of the vehicle.

According to the first technical feature of the present invention, the optical axis of the second light is inclined upwardly and rearwardly with respect to the optical axis of the first light, and the lower surface of the portion which connects the first lens portion and the second lens portion to each other extends substantially parallel to the optical axis of the second light. Accordingly, the first lens portion can be easily visually recognized from the rear of and above the vehicle. In this manner, even when the first lens portion is positioned vehicle forward of and below the second lens portion, it is possible to simultaneously ensure visibility of the second light and visibility of the first light from the rear of and above the vehicle.

Further, according to the first technical feature of the present invention, the lower surface of the portion which connects the first lens portion and the second lens portion to each other can be effectively illuminated by the second light from the second lamp portion.

According to the second technical feature of the present invention, the projecting portion is formed on the portion of the lens and hence, the boundary portion between the first printed circuit board and the second printed circuit board can be minimally visually recognized from the rear of the vehicle via the lens. Accordingly, design property of the vehicle-use rear combination lamp can be enhanced.

According to the third technical feature of the present invention, it is possible to effectively ensure the visibility of the second light and the visibility of the first light simultaneously.

According to the fourth technical feature of the present invention, it is possible to efficiently increase an area to which the second light is distributed without increasing a size of the vehicle-use rear combination lamp in the left-and-right direction. Accordingly, the visibility of the second light can be increased.

According to the fifth technical feature of the present invention, the vehicle-use rear combination lamp includes the third lamp portion which emits the third light and hence, the visibility of the third light can be efficiently increased. Further, the third lens portion is positioned vehicle rearward of and above the second lens portion and hence, the manner that the second light is viewed and the manner that the third light is viewed can be made different from each other. Accordingly, design property of the vehicle-use rear combination lamp can be enhanced.

According to the sixth technical feature of the present invention, it is possible to efficiently increase an area to which the third light is distributed without increasing a size of the vehicle-use rear combination lamp in the left-and-right direction. Accordingly, the visibility of the third light can be further increased.

According to the seventh technical feature of the present invention, the optical axis of the third light and the optical axis of the second light are substantially parallel to each other and hence, the visibility of the tail lamp light can be effectively increased.

According to the eighth technical feature of the present invention, the lower surface of the portion which connects the second lens portion and the third lens portion to each other extends substantially parallel to the optical axis of the third light. Accordingly, the first lens portion and the second lens portion can be easily visually recognized from the rear of and above the vehicle.

According to the ninth technical feature of the present invention, the distance from the second light source to the second lens portion and the distance from the third light source to the third lens portion are substantially equal. Accordingly, it is possible to make the brightness of the second lens portion and the brightness of the third lens portion approximately equal with the simple configuration.

According to the tenth technical feature of the present invention, it is possible to provide the vehicle which can acquire substantially the same manner of operation and advantageous effects as the vehicle-use rear combination lamp having the above-mentioned first to ninth technical features.

According to the eleventh technical feature of the present invention, the lower surface of the carrier disposed above the vehicle-use rear combination lamp is inclined upward toward the rear of the vehicle. Accordingly, it is possible to ensure the visibility of the vehicle-use rear combination lamp from the rear of and above the vehicle.

An embodiment of the invention will now be described by way of example and with reference to the accompanying drawings.

Fig. 1 is a left side view of a vehicle equipped with a rear combination lamp according to one embodiment of the present invention.
Fig. 2 is a view showing the rear combination lamp in Fig. 1 as viewed from a rear of the vehicle.
Fig. 3 is a longitudinal cross-sectional view of the rear combination lamp taken along a line III-III in Fig. 2.
Fig. 4 is a view showing the rear combination lamp in Fig. 2 in a state where an outer lens and an inner lens are removed from the rear combination lamp.
Fig. 5 is a view showing the rear combination lamp in Fig. 2 in a state where the outer lens is removed from the rear combination lamp.
Fig. 6 is a plan view of the rear combination lamp in Fig. 2 with the outer lens indicated by an imaginary line.
Fig. 7 is a view of the rear combination lamp as viewed in a direction indicated by an arrow A in a state where the outer lens is omitted from the rear combination lamp shown in Fig. 3.

Hereinafter, a vehicle-use rear combination lamp according to the present invention is described by exemplifying a preferred embodiment in association with a vehicle equipped with such a vehicle-use rear combination lamp with reference to the attached drawings.

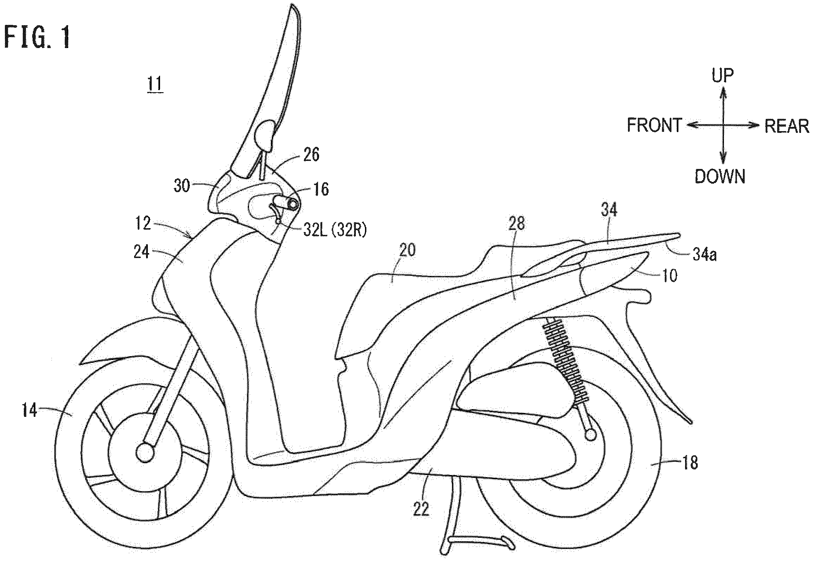

In this embodiment, the description is made by exemplifying a scooter-type motorcycle as a vehicle. However, the vehicle according to the present invention is not limited to the motorcycle, and the vehicle may be a motorcycle, a three-wheeled vehicle or the like of an on-road type or an off-road type. Further, unless otherwise specified, the directions "up", "down", "front", "rear" are described in accordance with the directions indicated by arrows shown in Fig. 1, and the left-and-right direction is described with reference to a rider seated on the motorcycle.

As shown in Fig. 1, a motorcycle 11 includes: a vehicle body cover 12 which covers a vehicle body frame, a front wheel 14 to be steered; a handle bar 16 for steering the front wheel 14; a rear wheel 18 which is a drive wheel; a seat 20 on which a rider sits; and a swing unit 22.

The vehicle body cover 12 includes: a front cover 24 which covers a front portion of the vehicle body frame; a head cover 26 which is positioned above the front cover 24; and a rear cover 28 which covers a rear portion of the vehicle body frame. A head lamp 30 which emits light toward a front side (vehicle forward) and a pair of left and right brake levers 32L, 32R are mounted on the head cover 26.

A carrier 34 on which a luggage or the like is placed and a rear combination lamp (vehicle-use rear combination lamp) 10 which is positioned below the carrier 34 are mounted on a rear end portion of the rear cover 28. A lower surface 34a of the carrier 34 is inclined upward toward a rear side (vehicle rearward).

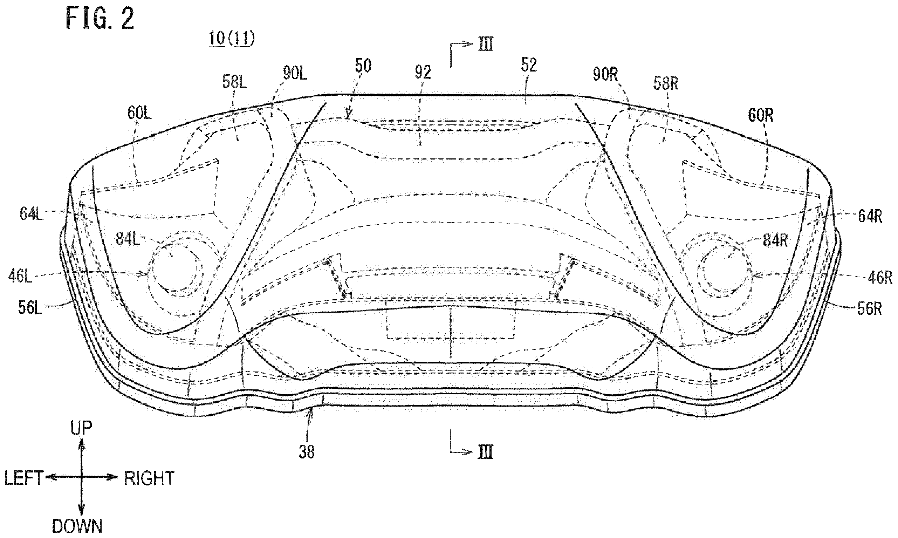

As shown in Fig. 2 to Fig. 6, the rear combination lamp 10 includes: a housing 38; a stop lamp portion (first lamp portion) 40 disposed in the housing 38; a tail lamp portion 41 disposed above the stop lamp portion 40; a pair of blinker lamp portions 46L, 46R disposed on both left and right sides of the tail lamp portion 41; a drive portion 48; an inner lens 50; and an outer lens 52.

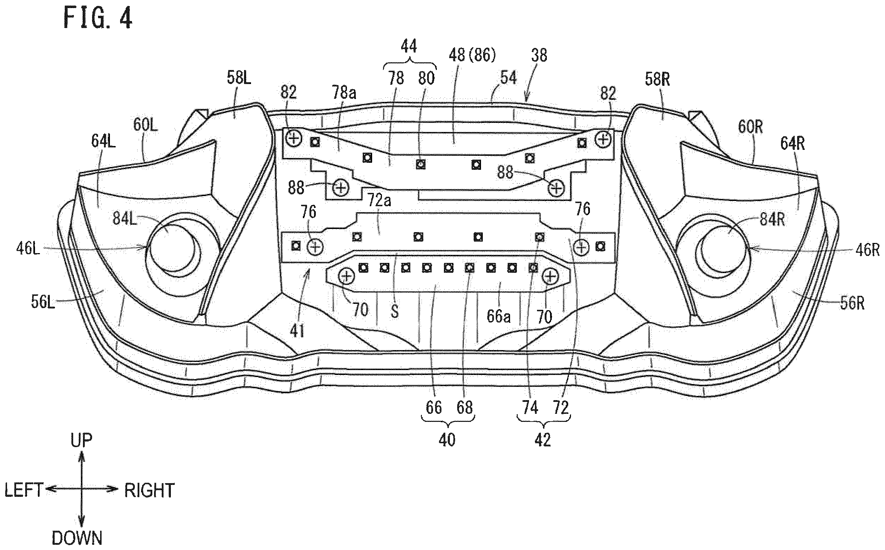

As shown in Fig. 4, the housing 38 is formed as an integral body using a resin material, and has a predetermined width size in a vertical direction, and extends in the left-and-right direction. The housing 38 includes: a center support portion 54; a pair of side support portions 56L, 56R disposed on both left and right sides of the center support portion 54; a pair of partition walls 58L, 58R which define the center support portion 54 and the respective side support portions 56L, 56R; and a pair of upper wall portions 60L, 60R which extend vehicle rearward from upper portions of the respective side support portions 56L, 56R.

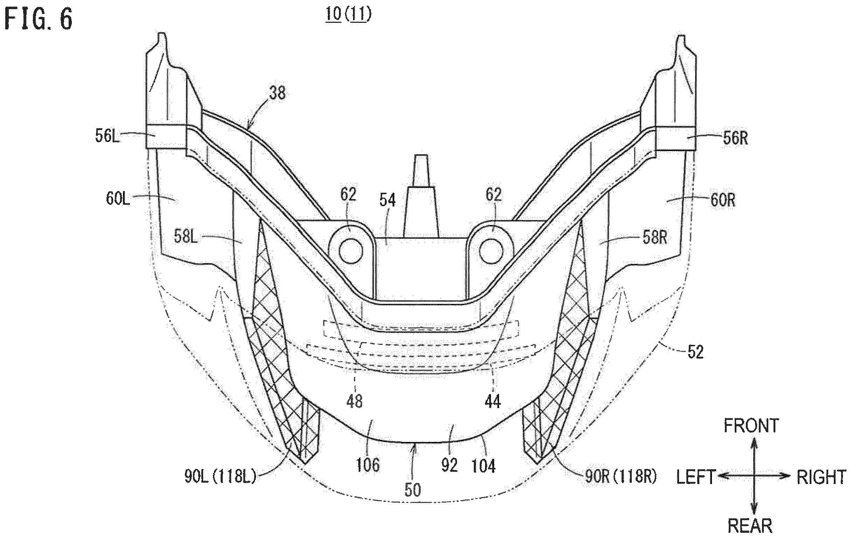

The center support portion 54 is provided for supporting the stop lamp portion 40, the tail lamp portion 41 and the drive portion 48, and is formed into an approximately V shape as viewed in a plan view (see Fig. 6). A plurality of mounting portions 62 for fixing the rear combination lamp 10 to the rear cover 28 by screw members not shown in the drawings are integrally formed on the center support portion 54. The plurality of mounting portions 62 may be formed on desired portions (portions other than the center support portion 54) of the housing 38.

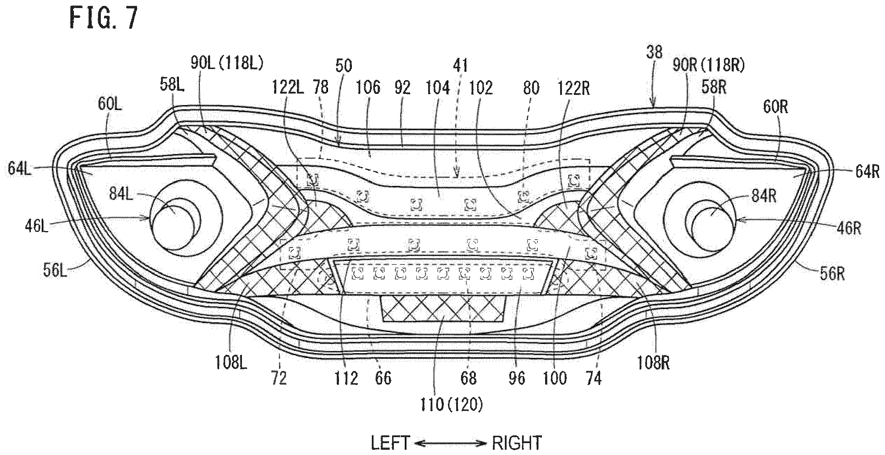

The side support portion 56L supports the blinker lamp portion 46L, and the side support portion 56R supports the blinker lamp portion 46R. The partition wall 58L projects rearward from a boundary portion between the center support portion 54 and the side support portion 56L, and extends along the vertical direction of the side support portion 56L. The partition wall 58L is formed such that a projection amount of the partition wall 58L is gradually increased toward a center portion of the partition wall 58L in the vertical direction from both end portions of the partition wall 58L in the vertical direction, and extends toward a right side (an inner side in the left-and-right direction) (see Fig. 4 and Fig. 7). Since the partition wall 58R has substantially the same configuration as the partition wall 58L, the detailed explanation of the partition wall 58R is omitted.

The upper wall portion 60L extends to the partition wall 58L from a left end portion of the side support portion 56L. That is, the upper wall portion 60L covers the blinker lamp portion 46L from above (see Fig. 6). Since the upper wall portion 60R has substantially the same configuration as the upper wall portion 60L, the detailed explanation of the upper wall portion 60R is omitted.

In such a housing 38, a reflection material is applied by coating to concave curved surfaces of the respective side support portions 56L, 56R which are directed rearward, surfaces of the respective partition walls 58L, 58R which are directed toward the outside in the left-and-right direction, and surfaces of the respective upper wall portions 60L, 60R which are directed downward. A pair of blinker reflectors 64L, 64R is formed in the housing 38 by such a reflection material.

On the other hand, the blinker reflector 64L may be formed by fixing a sheet member or a cover member capable of reflecting light to the side support portion 56L, the partition wall 58L and the upper wall portion 60L. Further, the blinker reflector 64L may be formed by molding the side support portion 56L, the partition wall 58L and the upper wall portion 60L using a resin material having optical reflectivity. A method of forming the blinker reflector 64R is substantially equal to the above-mentioned method of forming the blinker reflector 64L.

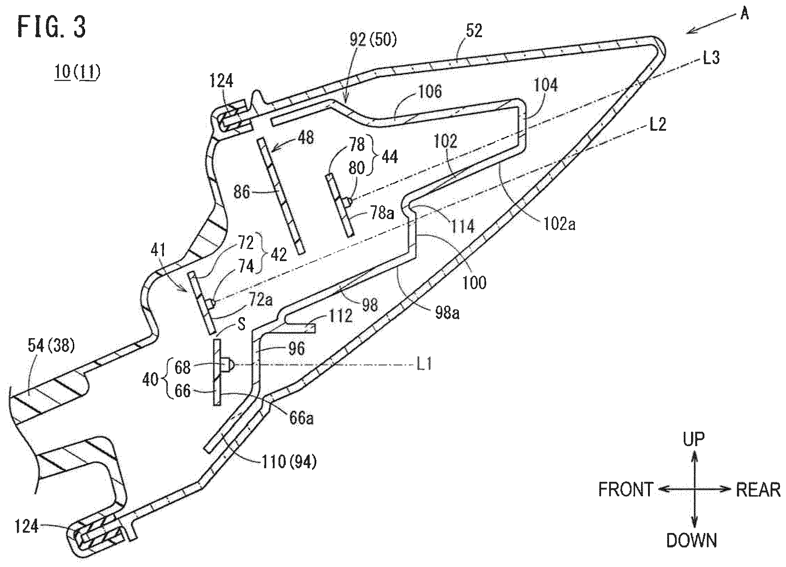

As shown in Fig. 3, and Fig. 4, the stop lamp portion 40 includes: a stop lamp printed circuit board (first printed circuit board) 66 which extends in the left-and-right direction; and a plurality of stop lamp light sources (first light source) 68 mounted on the stop lamp printed circuit board 66.

The stop lamp printed circuit board 66 is fixed to the approximately center of a lower portion of the center support portion 54 in the left-and-right direction by a plurality of (two in the example shown in Fig. 4) screw members 70. A mounting surface 66a of the stop lamp printed circuit board 66 on which the plurality of stop lamp light sources 68 are disposed face vehicle rearward in a state where the mounting surface 66a is parallel to a vertical plane.

Each stop lamp light source 68 is configured to turn on (emit stop lamp light) when a braking operation is performed (when the brake lever 32L, 32R is operated), and is formed of a light emitting diode. The respective stop lamp light sources 68 are mounted on the stop lamp printed circuit board 66 such that an optical axis L1 of stop lamp light (first light) is directed in an approximately horizontal direction. The plurality of stop lamp light sources 68 are arranged in a row at equal intervals along the left-and-right direction. On the other hand, the plurality of stop lamp light sources 68 may be arranged in two or more rows in the vertical direction.

The tail lamp portion 41 includes a first tail lamp portion 42 and a second tail lamp portion 44. The first tail lamp portion 42 includes: a first tail lamp printed circuit board (second printed circuit board) 72; and a first tail lamp light source (second light source) 74 disposed at plural positions on the first tail lamp printed circuit board 72.

The first tail lamp printed circuit board 72 is fixed to the center support portion 54 by a plurality of (two in the example shown in Fig. 4) screw members 76 in a state where the first tail lamp printed circuit board 72 is positioned above the stop lamp printed circuit board 66. That is, the first tail lamp printed circuit board 72 is provided as a separate body from the stop lamp printed circuit board 66, and a gap S is formed between the first tail lamp printed circuit board 72 and the stop lamp printed circuit board 66. The first tail lamp printed circuit board 72 extends longer than the stop lamp printed circuit board 66 in the left-and-right direction, and both left and right end portions of the first tail lamp printed circuit board 72 extend downward. A mounting surface 72a of the first tail lamp printed circuit board 72 on which the plurality of first tail lamp light sources 74 are disposed is directed rearward and upward.

Each first tail lamp light source 74 is formed of a light emitting diode. The respective first tail lamp light sources 74 are disposed on the first tail lamp printed circuit board 72 such that an optical axis L2 of the first tail lamp light (second light) is directed rearward and upward. That is, the optical axis L2 of the first tail lamp light is inclined upward toward the rear with respect to the optical axis L1 of the stop lamp light.

Among the plurality of first tail lamp light sources 74, respective first tail lamp light sources 74 positioned on both left and right ends are arranged below the first tail lamp light source 74 positioned at a middle in the left-and-right direction.

With such a configuration, it is possible to efficiently increase an area to which the first tail lamp light is distributed without increasing a size of the vehicle-use rear combination lamp 10 in the left-and-right direction. Accordingly, the visibility of the first tail lamp light can be increased.

The second tail lamp portion 44 includes: a second tail lamp printed circuit board (third printed circuit board) 78 positioned behind and above the first tail lamp printed circuit board 72; and a plurality of second tail lamp light sources (third light source) 80 disposed on the second tail lamp printed circuit board 78.

The second tail lamp printed circuit board 78 is fixed to an upper portion of the center support portion 54 by a plurality of (two in the example shown in Fig. 4) screw members 82 in a state where the second tail lamp printed circuit board 78 is positioned behind the first tail lamp printed circuit board 72. The second tail lamp printed circuit board 78 extends longer than the stop lamp printed circuit board 66 in the left-and-right direction, and both left and right end portions of the second tail lamp printed circuit board 78 extend upward. A mounting surface 78a of the second tail lamp printed circuit board 78 on which the plurality of second tail lamp light sources 80 are disposed is substantially parallel to the mounting surface 72a of the first tail lamp printed circuit board 72, and is directed rearward and upward.

Each second tail lamp light source 80 is formed of a light emitting diode. The respective second tail lamp light sources 80 are disposed on the second tail lamp printed circuit board 78 such that an optical axis L3 of the second tail lamp light (third light) becomes substantially parallel to the optical axis L2 of the first tail lamp light. That is, the optical axis L3 of the second tail lamp light is inclined upward toward the rear with respect to the optical axis L1 of the stop lamp light.

Among the plurality of second tail lamp light sources 80, respective second tail lamp light sources 80 positioned on both left and right ends are arranged above the second tail lamp light source 80 positioned at a middle in the left-and-right direction.

With such a configuration, it is possible to efficiently increase an area to which the second tail lamp light is distributed without increasing a size of the vehicle-use rear combination lamp 10 in the left-and-right direction. Accordingly, the visibility of the second tail lamp light can be increased.

The blinker lamp portion 46L includes a blinker lamp light source 84L, and the blinker lamp portion 46R includes a blinker lamp light source 84R. Each blinker lamp light source 84L, 84R is formed of a bulb and flickers (emitting blinker lamp light) when a direction indication switch not shown in the drawing is operated. Each blinker lamp light source 84L, 84R is mounted on each side support portion 56L, 56R such that each blinker lamp light source 84L, 84R is disposed adjacently to a center portion of each partition wall 58L, 58R in the vertical direction outside in the left and right direction.

The blinker lamp light emitted from the blinker lamp light source 84L is reflected on the blinker reflector 64L and is irradiated toward a rear side, while the blinker lamp light emitted from the blinker lamp light source 84R is reflected on the blinker reflector 64R and is irradiated toward a rear side. The blinker lamp light sources 84L, 84R are not limited to bulbs, and may be formed of a plurality of light emitting diodes.

The drive portion 48 includes a drive printed circuit board 86 on which electronic parts not shown in the drawing for performing a drive control of the stop lamp light sources 68, the first tail lamp light sources 74, the second tail lamp light sources 80 and the respective blinker lamp light sources 84L, 84R are mounted. The drive printed circuit board 86 is fixed to the center support portion 54 by a plurality of (two in the example shown in Fig. 4) screw members 88 in a state where the drive printed circuit board 86 is positioned between the first tail lamp printed circuit board 72 and the second tail lamp printed circuit board 78.

As shown in Fig. 3, Fig. 5 to Fig. 7, the inner lens 50 is a red transparent cover member which integrally covers the stop lamp portion 40, the tail lamp portion 41 and the drive printed circuit board 86 from behind. The inner lens 50 includes: a pair of side lens portions 90L, 90R mounted on the respective partition walls 58L, 58R; and a center lens portion 92 which connects these side lens portions 90L, 90R to each other.

The side lens portion 90L is formed such that the side lens portion 90L can engage with the partition wall 58L by fitting engagement, and is formed over an approximately entire length of the partition wall 58L in the vertical direction. To be more specific, the side lens portion 90L is brought into contact with a surface of the partition wall 58L directed toward a right side, a distal end surface of the partition wall 58L, and a surface of a distal end portion of the partition wall 58L directed toward a left side. With such a configuration, the inner lens 50 is fixed to the housing 38. Since the side lens portion 90R has substantially the same configuration as the above-mentioned side lens portion 90L, the detailed explanation of the side lens portion 90R is omitted.

The center lens portion 92 includes: a lower cover portion 94; a stop lens portion (first lens portion) 96 formed on the lower cover portion 94; a first inclined portion 98 extending rearward and upward from the stop lens portion 96; a first tail lens portion (second lens portion) 100 extending upward from a rear end portion of the first inclined portion 98; a second inclined portion 102 extending rearward and upward from an upper end portion of the first tail lens portion 100; a second tail lens portion (third lens portion) 104 extending upward from a rear end portion of the second inclined portion 102; and an upper cover portion 106 extending frontward from an upper end portion of the second tail lens portion 104.

The lower cover portion 94 includes: a pair of side lower cover portions 108L, 108R positioned at both side portions of a lower portion of the center lens portion 92 in the left-and-right direction; and a center lower cover portion 110 disposed below the stop lamp printed circuit board 66. The respective side lower cover portions 108L, 108R and the center lower cover portion 110 are continuously formed to each other, and extend upward toward the rear. The stop lens portion 96 is contiguously formed with a rear end portion of the center lower cover portion 110.

The stop lens portion 96 is positioned at a center portion of the lower portion of the center lens portion 92 in the left-and-right direction. That is, the stop lens portion 96 is disposed such that the stop lens portion 96 is sandwiched by the pair of side lower cover portions 108L, 108R in the left-and-right direction. The stop lens portion 96 is positioned above the optical axis L1 of the stop lamp light, and is brightened by being irradiated with the stop lamp light. A distance from each stop lamp light source 68 to the stop lens portion 96 is set shorter than a distance from each first tail lamp light source 74 to the first tail lens portion 100.

The first inclined portion 98, the first tail lens portion 100, the second inclined portion 102, and the second tail lens portion 104 respectively extend in the left-and-right direction so as to connect the pair of side lens portions 90L, 90R to each other. The first inclined portion 98 (a lower surface 98a of the first inclined portion 98) extends substantially parallel to the optical axis L2 of the first tail lamp light. With such a configuration, the stop lens portion 96 can be easily visually recognized from behind and above. A rear end of the first inclined portion 98 is positioned behind the second tail lamp light source 80. A front end of the first inclined portion 98 is positioned behind the first tail lamp light source 74. Accordingly, it is possible to effectively illuminate the first inclined portion 98 even when an LED having higher directivity than a bulb is used as the first tail lamp light source 74.

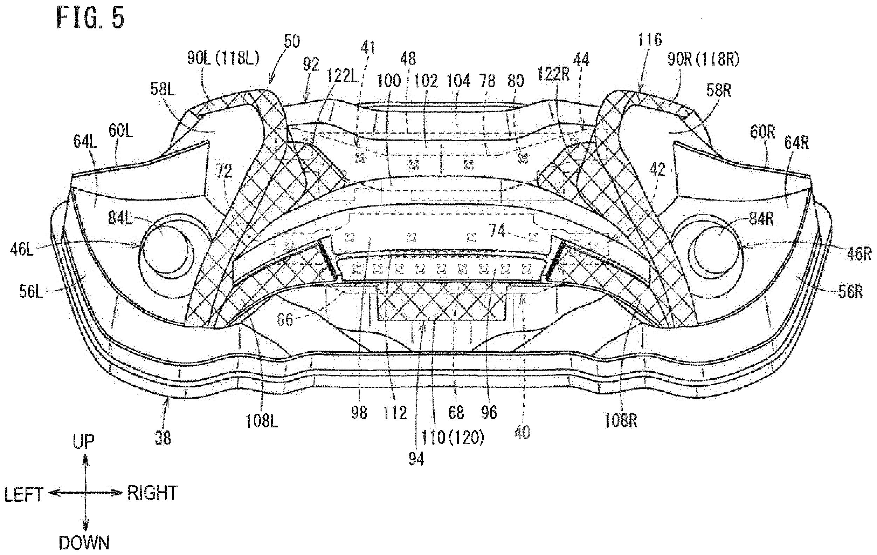

A projecting portion 112 which projects toward the rear is formed on a boundary portion between the stop lens portion 96 and the first inclined portion 98. The projecting portion 112 is positioned between the stop lamp printed circuit board 66 and the first tail lamp printed circuit board 72 as viewed from a rear side in the longitudinal direction of the vehicle (see Fig. 5). With such a configuration, a boundary portion between the stop lamp printed circuit board 66 and the first tail lamp printed circuit board 72 can be minimally visually recognized from the rear of the vehicle and hence, and thus design property of the rear combination lamp 10 can be enhanced.

The projecting portion 112 extends along an outer profile of the stop lens portion 96 (an upper end portion and both end portions in the left-and-right direction of the stop lens portion 96). In other words, the projecting portion 112 extends over an entire length of an upper end portion of the stop lens portion 96, and has both end portions thereof in the left-and-right direction extending along end portions of inner sides of the respective side lower cover portions 108L, 108R in the left-and-right direction. A distal end of the projecting portion 112 is positioned in front of a rear end of the first inclined portion 98 (see Fig. 3).

The first tail lens portion 100 is positioned above the optical axis L2 of the first tail lamp light, and is brightened by being irradiated with the first tail lamp light. The second inclined portion 102 (a lower surface 102a of the second inclined portion 102) extends substantially parallel to the optical axis L2 of the first tail lamp light. With such a configuration, the stop lens portion 96 and the first tail lens portion 100 can be easily visually recognized from behind and above.

A recessed portion 114 is formed on an outer surface of a boundary portion between the first tail lens portion 100 and the second inclined portion 102. The recessed portion 114 extends over an entire length of the first tail lens portion 100 in the left-and-right direction. With such a configuration, the boundary between the first tail lens portion 100 and the second inclined portion 102 (an outer profile of the first tail lens portion 100) becomes clear and hence, visibility of the first tail lens portion 100 can be enhanced.

The second tail lens portion 104 is positioned above the optical axis L3 of the second tail lamp light, and is brightened by being irradiated with the second tail lamp light. A distance from the respective second tail lamp light sources 80 to the second tail lens portion 104 is substantially equal to a distance from the respective first tail lamp light sources 74 to the first tail lens portion 100. The upper cover portion 106 covers the second tail lamp printed circuit board 78 from above. A front end of the second inclined portion 102 is positioned behind the second tail lamp light sources 80. Accordingly, it is possible to effectively illuminate the second inclined portion even when an LED having higher directivity than a bulb is used as the second tail lamp light source 80.

As shown in Fig. 5 to Fig. 7, a light transmission suppressing portion 116 which suppresses the transmission of light is formed on a portion of such an inner lens 50. To facilitate the understanding of the configuration, the light transmission suppressing portion 116 is indicated by cross hatching in Fig. 5 to Fig. 7.

The light transmission suppressing portion 116 is formed by applying by coating a material which suppresses the transmission of light to at least one of an outer surface and an inner surface of the inner lens 50. However, the light transmission suppressing portion 116 may be formed by fixing a sheet member or a cover member which suppresses the transmission of light to at least one of the outer surface and the inner surface of the inner lens 50. Further, the light transmission suppressing portion 116 may be formed by forming a portion of the inner lens 50 by molding using a resin material capable of suppressing the transmission of light.

The light transmission suppressing portion 116 includes: a pair of left and right side light-transmission suppressing portions 118L, 118R formed on the respective side lens portions 90L, 90R; a lower light-transmission suppressing portion 120 formed on the lower cover portion 94; and a pair of inner light-transmission suppressing portions 122L, 122R disposed on both side portions of the second inclined portion 102 in the left-and-right direction.

The side light-transmission suppressing portion 118L is formed over the entire side lens portion 90L. That is, the side light-transmission suppressing portion 118L extends along the vertical direction of the side lens portion 90L (inner lens 50). To be more specific, the side light-transmission suppressing portion 118L is disposed between the center lens portion 92 (the first tail lens portion 100 and the second tail lens portion 104) and the blinker reflector 64L.

An upper end portion of the side light-transmission suppressing portion 118L is positioned above the blinker lamp light source 84L, and a lower end portion of the side light-transmission suppressing portion 118L is positioned below the blinker lamp light source 84L (see Fig. 7). The side light-transmission suppressing portion 118L is positioned behind the second tail lens portion 104. Since the side light-transmission suppressing portion 118R has substantially the same configuration as the side light-transmission suppressing portion 118L, the detailed explanation of the side light-transmission suppressing portion 118R is omitted.

The lower light-transmission suppressing portion 120 is formed over the entire lower cover portion 94 (the pair of side lower cover portions 108L, 108R and the center lower cover portion 110). With such a configuration, an outer profile of the stop lens portion 96 becomes clear and hence, visibility of the stop lens portion 96 can be enhanced.

The respective inner light-transmission suppressing portions 122L, 122R extend toward an inner side in the left-and-right direction from a center portion of the side light-transmission suppressing portions 118L, 118R in the vertical direction. That is, the respective inner light-transmission suppressing portions 122L, 122R extend toward the inside in the left-and-right direction from portions of the respective side light-transmission suppressing portions 118L, 118R disposed close to the blinker lamp portions 46L, 46R in the left-and-right direction. In other words, the respective inner light-transmission suppressing portions 122L, 122R are, in Fig. 7, positioned between an end portion of the first tail lamp printed circuit board 72 and an end portion of the second tail lamp printed circuit board 78.

As shown in Fig. 2, Fig. 3 and Fig. 6, the outer lens 52 is a colorless transparent cover member which integrally covers the inner lens 50 and the pair of blinker lamp light sources 84L, 84R, and is mounted on the housing 38. An outer edge portion of the outer lens 52 is mounted on an outer edge portion of the housing 38 by way of a sealing member 124. With such a configuration, the intrusion of water into the inside of the outer lens 52 can be prevented. The outer lens 52 extends upward toward the rear of the vehicle.

According to this embodiment, the optical axis L2 of the first tail lamp light is inclined upward toward the rear of the vehicle with respect to the optical axis L1 of the stop lamp light, and the lower surface 98a of the first inclined portion 98 extends substantially parallel to the optical axis L2 of the first tail lamp light. Accordingly, the stop lens portion 96 can be easily visually recognized from the rear of and above the vehicle.

Accordingly, even when the stop lens portion 96 is positioned vehicle forward of and below the first tail lens portion 100, it is possible to ensure visibility of the first tail lamp light (tail lamp light) and the visibility of the stop lamp light simultaneously from the rear of and above the vehicle.

Further, the first tail lamp portion 42 is disposed vehicle forward of the front end of the lower surface 98a of the first inclined portion 98 and hence, the lower surface 98a of the first inclined portion 98 can be effectively illuminated by the first tail lamp light from the first tail lamp portion 42.

In this embodiment, the tail lamp portion 41 includes the first tail lamp portion 42 which emits the first tail lamp light, and the second tail lamp portion 44 which emits the second tail lamp light. Accordingly, the visibility of the tail lamp lights (the first tail lamp light and the second tail lamp light) can be efficiently increased. Further, the second tail lens portion 104 is positioned vehicle rear of and above the first tail lens portion 100 and hence, the manner that the first tail lamp light is viewed and the manner that the second tail lamp light is viewed can be made different from each other. Accordingly, design property of the vehicle-use rear combination lamp can be enhanced.

In this embodiment, the optical axis L2 of the first tail lamp light and the optical axis L3 of the second tail lamp light are substantially parallel to each other and hence, the visibility of the tail lamp light can be effectively increased.

In this embodiment, the vehicle-use rear combination lamp 10 includes the outer lens 52 mounted on the housing 38 in a state where the outer lens 52 covers the inner lens 50 and hence, design property of the rear combination lamp 10 can be enhanced.

Further, the lower surface 34a of the carrier 34 disposed above the rear combination lamp 10 is inclined upward toward the rear of the vehicle. Accordingly, it is possible to ensure the visibility of the rear combination lamp 10 from the rear of and above the vehicle.

According to this embodiment, the tail lamp portion 41 and the pair of blinker lamp portions 46L, 46R are mounted on the common housing 38 and hence, the rear combination lamp 10 can be provided as an integral body and in a compact shape. Further, the side light-transmission suppressing portions 118L, 118R are formed on the inner lens 50 and hence, visibility of the tail lamp light and the visibility of the respective blinker lamp lights which are independent from each other can be ensured.

Further, the respective side light-transmission suppressing portions 118L, 118R extend over the entire length of the side lens portions 90L, 90R in the vertical direction and hence, visibility of the tail lamp light and the visibility of the blinker lamp lights which are independent from each other can be effectively ensured.

Upper end portions of the respective side light-transmission suppressing portions 118L, 118R are positioned above the respective blinker lamp light sources 84L, 84R, and lower end portions of the respective side light-transmission suppressing portions 118L, 118R are positioned below the respective blinker lamp light sources 84L, 84R. Accordingly, visibility of the tail lamp light and the visibility of the respective blinker lamp lights which are independent from each other can be ensured more effectively.

The respective side light-transmission suppressing portions 118L, 118R are positioned vehicle rear of the first tail lens portion 100 and the second tail lens portion 104. Accordingly, visibility of the tail lamp light and the visibility of the respective blinker lamp lights which are independent from each other can be ensured further effectively.

In this embodiment, the side light-transmission suppressing portions 118L, 118R are disposed between the center lens portion 92 (the first tail lens portion 100 and the second tail lens portion 104) and the respective blinker reflectors 64L, 64R. Accordingly, visibility of the tail lamp light and the visibility of the respective blinker lamp lights which are independent from each other can be ensured further effectively.

The respective inner light-transmission suppressing portions 122L, 122R extend toward the inside in the left-and-right direction from portions of the respective side light-transmission suppressing portions 118L, 118R disposed close to the blinker lamp portions 46L, 46R in the left-and-right direction. Accordingly, visibility of the tail lamp light and the visibility of the respective blinker lamp lights which are independent from each other can be ensured further effectively.

The pair of side lens portions 90L, 90R provided with the side light-transmission suppressing portions 118L, 118R are disposed on both left and right sides of the center lens portion 92 and hence, design property of the rear combination lamp 10 can be enhanced.

This embodiment is not limited to the above-mentioned configuration. In this embodiment, the pair of blinker lamp portions 46L, 46R are disposed in the common housing 38. However, the pair of blinker lamp portions 46L, 46R may be provided as a body separate from the rear combination lamp 10. In this case, the outer lens 52 may be omitted. In this embodiment, the second tail lamp portion 44 may be omitted.

It is needless to say that the vehicle-use rear combination lamp and the vehicle according to the present invention are not limited to the above-mentioned embodiment, and can adopt various configurations without departing from the scope of the present invention.

An explanation of the reference signs used in the drawings is provided below.

10: rear combination lamp (vehicle-use rear combination lamp)
11: motorcycle (vehicle)
34: carrier
38: housing
40: stop lamp portion (first lamp portion)
42: first tail lamp portion (second lamp portion)
44: second tail lamp portion (third lamp portion)
50: inner lens (lens)
52: outer lens
66: stop lamp printed circuit board (first printed circuit board)
68: stop lamp light source (first light source)
72: first tail lamp printed circuit board (second printed circuit board)
74: first tail lamp light source (second light source)
78: second tail lamp printed circuit board (third printed circuit board)
80: second tail lamp light source (third light source)
90L, 90R: side lens portion
92: center lens portion
96: stop lens portion (first lens portion)
98: first inclined portion
100: first tail lens portion (second lens portion)
102: second inclined portion
104: second tail lens portion (third lens portion)
112: projecting portion

## Claims

1. A vehicle-use rear combination lamp (10) comprising:
a first lamp portion (40) which emits a first light;
a second lamp portion (42) which emits a second light;
a common housing (38) on which the first lamp portion (40) and the second lamp portion (42) are mounted; and
a lens (50) which integrally covers the first lamp portion (40) and the second lamp portion (42), wherein
the lens (50) has a first lens portion (96) to which the first light is irradiated and a second lens portion (100) to which the second light is irradiated,
the first lens portion (96) is positioned vehicle forward of and below the second lens portion (100),
a lower surface (98a) of a portion (98) which connects the first lens portion (96) and the second lens portion (100) to each other extends substantially parallel to an optical axis (L2) of the second light, and
wherein the second lamp portion (42) is disposed vehicle forward of a front end of the lower surface (98a);
**characterised in that** the arr optical axis (L2) of the second light is inclined upwardly and rearwardly with respect to an optical axis (L1) of the first light.

2. The vehicle-use rear combination lamp (10) according to claim 1, wherein the first lamp portion (40) has a first printed circuit board (66) and a first light source (68) mounted on the first printed circuit board (66), the second lamp portion (42) has a second printed circuit board (72) provided as a part separate from the first printed circuit board (66) and a second light source (74) mounted on the second printed circuit board (72), and a projecting portion (112) which projects vehicle rearward is formed on a portion of the lens (50) positioned between the first printed circuit board (66) and the second printed circuit board (72) as viewed from the rear of the vehicle.

3. The vehicle-use rear combination lamp (10) according to claim 2, wherein the projecting portion (112) is disposed on a boundary portion between the portion (98) and the first lens portion (96).

4. The vehicle-use rear combination lamp (10) according to any one of claims 1 to 3, wherein the second light source (74) is formed of a light emitting diode, a plurality of second light sources (74) are disposed along a left-and-right direction, and out of the plurality of second light sources (74), the respective second light sources (74) positioned on both left and right ends are disposed below the second light source (74) positioned at the middle in the left-and-right direction.

5. The vehicle-use rear combination lamp (10) according to any one of claims 2 to 4, further comprising a third lamp portion (44) which is formed as a part separate from the second lamp portion (42) and emits a third light,
the third lamp portion (44) has a third printed circuit board (78) and a third light source (80) mounted on the third printed circuit board (78),
the lens (50) includes a third lens portion (104) to which the third light is irradiated, and
the third lens portion (104) is positioned vehicle rearward of and above the second lens portion (100).

6. The vehicle-use rear combination lamp (10) according to claim 5, wherein the third light source (80) is formed of a light emitting diode, a plurality of third light sources (80) are disposed along the left-and-right direction, and
out of the plurality of third light sources (80), the respective third light sources (80) positioned on both left and right ends are disposed above the third light source (80) positioned at the middle in the left-and-right direction.

7. The vehicle-use rear combination lamp (10) according to claim 5 or 6, wherein an optical axis (L3) of the third light is substantially parallel to the optical axis (L2) of the second light.

8. The vehicle-use rear combination lamp (10) according to any one of claims 5 to 7, wherein a lower surface (102a) of a portion (102) which connects the second lens portion (100) and the third lens portion (104) to each other extends substantially parallel to the optical axis (L3) of the third light.

9. The vehicle-use rear combination lamp (10) according to any one of claims 5 to 8, wherein a distance from the second light source (74) to the second lens portion (100) and a distance from the third light source (80) to the third lens portion (104) are substantially equal.

10. A vehicle (11) comprising the vehicle-use rear combination lamp (10) according to any one of claims 1 to 9.

11. The vehicle (11) according to claim 10, wherein the vehicle (11) is a motorcycle having a carrier (34) above the vehicle-use rear combination lamp (10), and
a lower surface (34a) of the carrier (34) is inclined upward toward the rear of the vehicle.

## Patentansprüche

1. Fahrzeugheckleuchte (10), umfassend:
einen ersten Lampenabschnitt (40), der ein erstes Licht emittiert;
einen zweiten Lampenabschnitt (42), der ein zweites Licht emittiert;
ein gemeinsames Gehäuse (38), auf dem der erste Lampenabschnitt (40) und der zweite Lampenabschnitt (42) montiert sind; und
eine Linse (50), die den ersten Lampenabschnitt (40) und den zweiten Lampenabschnitt (42) integral abdeckt, wobei
die Linse (50) einen ersten Linsenabschnitt (96), auf den das erste Licht gestrahlt wird, und einen zweiten Linsenabschnitt (100), auf den das zweite Licht gestrahlt wird, aufweist,
der erste Linsenabschnitt (96) vor und unter dem zweiten Linsenabschnitt (100) positioniert ist,
eine untere Fläche (98a) eines Abschnitts (98), der den ersten Linsenabschnitt (96) und den zweiten Linsenabschnitt (100) miteinander verbindet, sich im Wesentlichen parallel zu einer optischen Achse (L2) des zweiten Lichts erstreckt, und
wobei der zweite Lampenabschnitt (42) im Fahrzeug vor einem vorderen Ende der unteren Fläche (98a) angeordnet ist;
**dadurch gekennzeichnet, dass** die optische Achse (L2) des zweiten Lichts bezüglich einer optischen Achse (L1) des ersten Lichts nach oben und nach hinten geneigt ist.

2. Fahrzeugheckleuchte (10) nach Anspruch 1, wobei der erste Lampenabschnitt (40) eine erste Leiterplatte (66) und eine erste Lichtquelle (68) aufweist, die auf der ersten Leiterplatte (66) montiert ist, wobei der zweite Lampenabschnitt (42) eine zweite Leiterplatte (72), die als ein von der ersten Leiterplatte (66) getrenntes Teil vorgesehen ist, und eine zweite Lichtquelle (74) aufweist, die auf der zweiten Leiterplatte (72) montiert ist, und ein vorstehender Abschnitt (112), der im Fahrzeug nach hinten vorsteht, auf einem Abschnitt der Linse (50) ausgebildet ist, der zwischen der ersten Leiterplatte (66) und der zweiten Leiterplatte (72) von der Rückseite des Fahrzeugs aus gesehen angeordnet ist.

3. Fahrzeugheckleuchte (10) nach Anspruch 2, wobei der vorstehende Abschnitt (112) an einem Grenzabschnitt zwischen dem Abschnitt (98) und dem ersten Linsenabschnitt (96) angeordnet ist.

4. Fahrzeugheckleuchte (10) nach einem der Ansprüche 1 bis 3, wobei die zweite Lichtquelle (74) aus einer Leuchtdiode gebildet ist, eine Vielzahl von zweiten Lichtquellen (74) entlang einer Links-Rechts-Richtung angeordnet ist, und aus der Vielzahl von zweiten Lichtquellen (74) die jeweiligen zweiten Lichtquellen (74), die an den beiden Enden links und rechts angeordnet sind, unter der zweiten Lichtquelle (74) angeordnet sind, die in der Mitte in der Links-Rechts-Richtung angeordnet ist.

5. Fahrzeugheckleuchte (10) nach einem der Ansprüche 2 bis 4, weiterhin umfassend einen dritten Lampenabschnitt (44), der als vom zweiten Lampenabschnitt (42) getrennter Teil ausgebildet ist und ein drittes Licht emittiert,
der dritte Lampenabschnitt (44) eine dritte Leiterplatte (78) und eine dritte Lichtquelle (80) aufweist, die auf der dritten Leiterplatte (78) montiert ist,
die Linse (50) einen dritten Linsenabschnitt (104) aufweist, auf den das dritte Licht gestrahlt wird, und
der dritte Linsenabschnitt (104) im Fahrzeug hinter und über dem zweiten Linsenabschnitt (100) angeordnet ist.

6. Fahrzeugheckleuchte (10) nach Anspruch 5, wobei die dritte Lichtquelle (80) aus einer Leuchtdiode gebildet ist, eine Vielzahl von dritten Lichtquellen (80) entlang der Links-Rechts-Richtung angeordnet ist, und
aus der Vielzahl von dritten Lichtquellen (80) die jeweiligen dritten Lichtquellen (80), die an den beiden Enden links und rechts angeordnet sind, über der dritten Lichtquelle (80) angeordnet sind, die in der Mitte in der Links-Rechts-Richtung angeordnet ist.

7. Fahrzeugheckleuchte (10) nach Anspruch 5 oder 6, wobei eine optische Achse (L3) des dritten Lichts im Wesentlichen parallel zur optischen Achse (L2) des zweiten Lichts verläuft.

8. Fahrzeugheckleuchte (10) nach einem der Ansprüche 5 bis 7, wobei sich eine untere Fläche (102a) eines Abschnitts (102), der den zweiten Linsenabschnitt (100) und den dritten Linsenabschnitt (104) miteinander verbindet, im Wesentlichen parallel zur optischen Achse (L3) des dritten Lichts erstreckt.

9. Fahrzeugheckleuchte (10) nach einem der Ansprüche 5 bis 8, wobei ein Abstand von der zweiten Lichtquelle (74) zum zweiten Linsenabschnitt (100) und ein Abstand von der dritten Lichtquelle (80) zum dritten Linsenabschnitt (104) im Wesentlichen gleich sind.

10. Fahrzeug (11) umfassend die Fahrzeugheckleuchte (10) nach einem der Ansprüche 1 bis 9.

11. Fahrzeug (11) nach Anspruch 10, wobei das Fahrzeug (11) ein Motorrad ist, das einen Träger (34) über der Fahrzeugheckleuchte (10) aufweist, und
eine Unterseite (34a) des Trägers (34) nach oben zum Fahrzeugheck hin geneigt ist.

## Revendications

1. Feu arrière combiné pour véhicule (10) comprenant :
une première portion de feu (40) qui émet une première lumière ;
une deuxième portion de feu (42) qui émet une deuxième lumière ;
un logement commun (38) sur lequel la première portion de feu (40) et la deuxième portion de feu (42) sont montées ; et
une lentille (50) qui recouvre intégralement la première portion de feu (40) et la deuxième portion de feu (42), dans lequel
la lentille (50) a une première portion de lentille (96) vers laquelle la première lumière est irradiée et une deuxième portion de lentille (100) vers laquelle la deuxième lumière est irradiée,
la première portion de lentille (96) est positionnée vers l'avant du véhicule par rapport à la deuxième portion de lentille (100) et en dessous de celle-ci,
une surface inférieure (98a) d'une portion (98) qui connecte la première portion de lentille (96) et la deuxième portion de lentille (100) l'une à l'autre s'étend de manière sensiblement parallèle à un axe optique (L2) de la deuxième lumière, et
dans lequel la deuxième portion de feu (42) est disposée vers l'avant du véhicule par rapport à une extrémité avant de la surface inférieure (98a) ;
**caractérisé en ce que** l'axe optique (L2) de la deuxième lumière est incliné vers le haut et vers l'arrière par rapport à un axe optique (L1) de la première lumière.

2. Feu arrière combiné pour véhicule (10) selon la revendication 1, dans lequel la première portion de feu (40) a une première carte de circuit imprimé (66) et une première source lumineuse (68) montée sur la première carte de circuit imprimé (66), la deuxième portion de feu (42) a une deuxième carte de circuit imprimé (72) fournie comme une pièce distincte de la première carte de circuit imprimé (66) et une deuxième source lumineuse (74) montée sur la deuxième carte de circuit imprimé (72), et une portion de projection (112) qui se projette vers l'arrière du véhicule est formée sur une portion de la lentille (50) positionnée entre la première carte de circuit imprimé (66) et la deuxième carte de circuit imprimé (72) selon une vue depuis l'arrière du véhicule.

3. Feu arrière combiné pour véhicule (10) selon la revendication 2, dans lequel la portion de projection (112) est disposée sur une portion frontière entre la portion (98) et la première portion de lentille (96).

4. Feu arrière combiné pour véhicule (10) selon l'une quelconque des revendications 1 à 3, dans lequel la deuxième source lumineuse (74) est formée d'une diode lumineuse, une pluralité de deuxièmes sources lumineuses (74) sont disposées le long d'une direction gauche et droite, et parmi la pluralité de deuxièmes sources lumineuses (74), les deuxièmes sources lumineuses (74) respectives positionnées à la fois sur les extrémités gauche et droite sont disposées en dessous de la deuxième source lumineuse (74) positionnée au milieu dans la direction gauche et droite.

5. Feu arrière combiné pour véhicule (10) selon l'une quelconque des revendications 2 à 4, comprenant en outre une troisième portion de feu (44) qui est formée comme une pièce distincte de la deuxième portion de feu (42) et émet une troisième lumière,
la troisième portion de feu (44) a une troisième carte de circuit imprimé (78) et une troisième source lumineuse (80) montée sur la troisième carte de circuit imprimé (78),
la lentille (50) inclut une troisième portion de lentille (104) vers laquelle la troisième lumière est irradiée, et
la troisième portion de lentille (104) est positionnée vers l'arrière du véhicule par rapport à la deuxième portion de lentille (100) et au-dessus de celle-ci.

6. Feu arrière combiné pour véhicule (10) selon la revendication 5, dans lequel la troisième source lumineuse (80) est formée d'une diode lumineuse, une pluralité de troisièmes sources lumineuses (80) sont disposées le long de la direction gauche et droite, et
parmi la pluralité de troisièmes sources lumineuses (80), les troisièmes sources lumineuses (80) respectives positionnées à la fois sur les extrémités gauche et droite sont disposées au-dessus de la troisième source lumineuse (80) positionnée au milieu dans la direction gauche et droite.

7. Feu arrière combiné pour véhicule (10) selon la revendication 5 ou 6, dans lequel un axe optique (L3) de la troisième lumière est sensiblement parallèle à l'axe optique (L2) de la deuxième lumière.

8. Feu arrière combiné pour véhicule (10) selon l'une quelconque des revendications 5 à 7, dans lequel une surface inférieure (102a) d'une portion (102) qui connecte la deuxième portion de lentille (100) et la troisième portion de lentille (104) l'une à l'autre s'étend de manière sensiblement parallèle à l'axe optique (L3) de la troisième lumière.

9. Feu arrière combiné pour véhicule (10) selon l'une quelconque des revendications 5 à 8, dans lequel une distance de la deuxième source lumineuse (74) à la deuxième portion de lentille (100) et une distance de la troisième source lumineuse (80) à la troisième portion de lentille (104) sont sensiblement égales.

10. Véhicule (11) comprenant le feu arrière combiné pour véhicule (10) selon l'une quelconque des revendications 1 à 9.

11. Véhicule (11) selon la revendication 10, dans lequel le véhicule (11) est une moto ayant un support (34) au-dessus du feu arrière combiné pour véhicule (10), et
une surface inférieure (34a) du support (34) est inclinée vers le haut vers l'arrière du véhicule.
